# EUROPÄISCHE PATENTSCHRIFT

(11) **EP 2 030 837 B1**
(45) Veröffentlichungstag und Bekanntmachung des Hinweises auf die Patenterteilung: **05.12.2018**
(21) Anmeldenummer: 08157585.4
(22) Anmeldetag: 04.06.2008
(51) Int. Cl.: B60P 3/06, B60P 7/13

(54) **Arretiervorrichtung**
Lock device
Dispositif d'arrêt

(30) Priorität: 27.08.2007 DE 102007040628
(43) Veröffentlichungstag der Anmeldung: 04.03.2009
(73) Patentinhaber: CLAAS Selbstfahrende Erntemaschinen GmbH, 33428 Harsewinkel (DE)
(72) Erfinder: Flasskamp, Heinrich, 33428, Harsewinkel (DE)

(56) Entgegenhaltungen:
- DE-A1- 2 914 371
- DE-A1- 10 200 982
- DE-U- 1 780 914
- DE-U1-202007 008 759
- GB-A- 1 413 181
- US-A- 3 659 533
- US-A- 4 611 962
- US-B1- 6 390 742
- US-B1- 6 464 436

## Beschreibung

Die Erfindung betrifft eine Arretiervorrichtung zur Arretierung einer Maschine auf einem Transportfahrzeug nach dem Oberbegriff des Anspruchs 1 sowie eine Verwendung der Arretiervorrichtung in einem Verfahren nach dem Oberbegriff des Anspruchs 16.

Zum Schienentransport auf Bahnwagons oder zum Straßentransport auf LKW-Anhängern müssen Fahrzeuge, wie etwa landwirtschaftliche Arbeitsmaschinen oder LKW auf dem Transportmittel arretiert werden. Im Falle von landwirtschaftlichen Arbeitsmaschinen, wie etwa Mähdreschern oder Feldhäckslern ist es in der Regel zudem erforderlich die Laufräder zu demontieren, damit das mit dem zu befördernden Fahrzeug bestückte Transportfahrzeug die im Straßen- oder Schienentransport zulässigen Höhen- und Breitenmaße einhält. Gesetzliche Bestimmungen regeln zudem die Sicherheitsstandards, weiche bei der Arretierung von Fahrzeugen auf dem jeweiligen Transportmittel einzuhalten sind. Aufgrund des zunehmenden Versandvolumens wird es auch immer wichtiger den Prozess der Verladung von Fahrzeugen auf Transportfahrzeuge zu effektivieren, sodass veriadeprozessbedingte Stillstandszeiten verringert werden.

In der DE 29 14 371 ist beispielsweise ein Verladeverfahren für Mähdrescher beschrieben, bei dem der Mähdrescher auf ein Transportfahrzeug, hier einen Bahnwagon fährt, dann mittels eines Hebezeugs zur Demontage der Laufräder ausgehoben und sodann auf den Fahrzeugachsen zugeordneten Konsolen auf dem Transportfahrzeug abgesetzt wird, Die Arretierung oder Verzurrung des Mähdreschers erfolgt sodann per Hand mittels Drähten oder Ketten. Diese Art der Verzurrung ist sehr arbeitsintensiv und nimmt einen erheblichen Zeitbedarf in Anspruch, In analoger Weise ist auch die Entfernung der Befestigungsmittel sehr zeitaufwendig und dauert nicht selten genauso lange wie das Verzurren. Zudem sind bei der Arretierung mit Ketten und Drähten regelmäßig Lackschäden an den zu transportierenden Fahrzeugen die Folge, die entweder kostenintensive Nacharbeitsmaßnahmen oder eine Wertminderung des transportierten Fahrzeugs nach sich ziehen.

Es ist deshalb Aufgabe der Erfindung die beschriebenen Nachteile des Standes der Technik zu vermeiden und insbesondere eine Vorrichtung und ein Verfahren zur Arretierung von Maschinen auf Transportfahrzeugen vorzuschlagen, wodurch eine schnelle Be- und Entladung der zu transportierenden Maschinen ermöglicht wird und Beschädigungen an den zu transportierenden Maschinen vermieden werden.

Diese Aufgabe wird erfindungsgemäß durch die kennzeichnenden Merkmale der Ansprüche 1 und 16 gelöst.

Indem die Arretiervorrichtung zumindest eine mit dem Transportfahrzeug verbundene Trageinheit, ein mit der Trageinheit verbindbares Befestigungselement und den zumindest einen mit der Maschine verbundenen Arretieranschlag umfasst und wobei der zumindest eine Arretieranschlag formschlüssig mit dem Befestigungselement koppelbar ist wird sichergestellt, dass eine schnelle Be- und Entladung der zu transportierenden Maschinen ermöglicht wird und Beschädigungen an den zu transportierenden Maschinen weitgehend vermieden werden.

Erfindungsgemäß ist die zu arretierende Maschine als Fahrzeug ausgebildet, das zumindest eine Vorderachse und eine Hinterachse umfasst, wobei für jede Fahrzeugachse des zu arretierenden Fahrzeugs jeweils eine Trageinheit auf dem Transportfahrzeug positioniert ist und jede Trageinheit jeweils in ihren außenseitigen Bereichen eine oder mehrere Aussparungen aufweist. Dabei wird ein schneller Be- und Endladevorgang, sowie eine verkehrssichere Arretierung des auf einem Transportfahrzeug zu fixierenden Fahrzeugs gewährleistet.

In einer vorteilhaften Ausgestaltung der Erfindung ist die mit dem Transportfahrzeug verbundene Trageinheit als Traverse ausgebildet, die in ihrem tarnsportfahrzeugseitigen Bereich mit dem Transportfahrzeug lösbar verbunden ist und die in ihrem fahrzeugseitigen Bereich eine von einer oder mehreren Aussparungen durchsetzte Auflagefläche umfasst Eine derart ausgeführte Traverse hat insbesondere die Vorteile, dass sie wegen der Vielzahl von Aussparungen sehr universell für verschiedene Maschinenformen einsetzbar und zudem einfach und damit kostengünstig herstellbar ist.

indem in einer weiteren vorteilhaften Ausgestaltung die eine oder mehreren Aussparungen als Langlöcher ausgebildet sind und die Vielzahl von Langlöchern in regelmäßigen oder unregelmäßigen Abständen die Auflagefläche durchsetzen wird der universelle Einsatz der erfindungsgemäßen Trageinheiten unabhängig von der Beschaffenheit der zu arretierenden Maschinen und/oder Fahrzeuge weiter erhöht. Analoge Effekte ergeben sich zudem, wenn dem Transportfahrzeug eine Vielzahl von Trageinheiten zugeordnet sind und jede der Trageinheiten lösbar mit dem Transportfahrzeug verbunden ist.

In einer vorteilhaften Ausgestaltung der Erfindung umfasst das mit der Trageinheit verbindbare Befestigungselement eine um eine vertikale Achse verdrehbare Arretiereinheit, die in ihrem untenseitigen Bereich zumindest ein Arretierelement und in ihrem obenseitigen Bereich zumindest ein Aufnahmeelement umfasst. Damit wird es möglich, dass die zu arretierende Maschine mit einem einzigen Befestigungselement fixierbar ist.

Eine schnelle Verbindung des Befestigungselementes mit der auf dem Transportfahrzeug angeordneten jeweiligen Trageinheit ergibt sich dann, wenn das zumindest eine Arretierelement im Querschnitt mit der Gestalt der Aussparungen der Trageinheit in der Weise korrespondiert, dass das Arretierelement die Aussparung durchsetzen kann und durch Verdrehen des Befestigungselementes in seiner Ausrichtung zur Aussparung versetzbar ist, wobei die Änderung der Ausrichtung zugleich eine Lagefixierung des Befestigungselementes an der Trageinheit bewirkt.

Damit die zu arretierende Maschine schnell und sicher in das jeweilige Befestigungselement einsetztbar ist weist in einer vorteilhaften Weiterbildung der Erfindung das der jeweiligen Arretiervorrichtung zugeordnete Aufnahmeelement vorzugsweise eine konische Gestalt auf.

In einer weiteren vorteilhaften Ausgestaltung der Erfindung kann das Befestigungselement als so genannter Twist-Lock ausgeführt.

Eine konstruktiv einfache Umsetzung des der Maschine zugeordneten Arretieranschlages ergibt sich dann, wenn der zumindest eine mit der Maschine verbundene Arretieranschlag als von einer Ausnehmung durchsetztes Winkelprofil ausgebildet ist und die Ausnehmung den Arretieranschlag wenigstens teilweise durchsetzt.

In analoger Weise zur Struktur der Fixierung zwischen Trageinheit und Befestigungselement ergibt sich ebenfalls eine einfach und schnell handhabbare und zudem sichre Verriegelung der Maschine an dem jeweiligen Befestigungselement, wenn in einer weiteren vorteilhaften Ausgestaltung der Erfindung die Außenkontur der zumindest einen Ausnehmung des Arretseranschlags mit der Außenkontur des Aufnahmeelementes des Befestigungselementes in der Weise korrespondiert, dass das Aufnahmeelement die Ausnehmung durchsetzen kann und durch Verdrehen des Befestigungselementes in seiner Ausrichtung zur Ausnehmung versetzbar ist, wobei die Änderung der Ausrichtung zugleich eine Lagefixierung des Arretieranschlags an dem Befestigungselement bewirkt.

Eine schnelle und sichere Fixierung eines Fahrzeugs auf einem Transportfahrzeug ergibt sich auch dann, wenn das zumindest eine Vorderachse und wenigstens eine Hinterachse umfassend ausgebildet ist und der Vorderachse und/oder Hinterachse des Fahrzeugs im Bereich der jeweiligen Laufräder jeweils zumindest ein Arretieranschlag zugeordnet ist und der jeweilige Arretieranschlag mit der Rahmenstruktur der jeweiligen Fahrzeugachse in der Weise verschweißt ist, dass die den jeweiligen Arretieranschlag zumindest teilweise durchsetzende Ausnehmung in einem untenseitigen Bereich frei zugänglich ist.

Die Effizienz des Be- und Entladeprozesses wird in einer weiteren vorteilhaften Ausgestaltung der Erfindung auch dadurch weiter erhöht, dass das Befestigungselement drei Schaltstellungen umfasst und wobei in einer ersten Schaltstellung das Arretierelement fluchtend zur Lage der Aussparung der Trageinheit ausgerichtet ist, in einer zweiten Schaltstellung das Aufnahmeelement fluchtend zur Lage der Ausnehmung des Arretieranschlags ausgerichtet ist und in einer dritten Schaltstellung das Arretierelement und das Aufnahmeelement jeweils versetzt zur jeweils korrespondierenden Ausnehmung oder Aussparung angeordnet sind.

In einer vorteilhaften Weiterbildung der Erfindung kann das zu arretierende Fahrzeug als landwirtschaftliche Arbeitsmaschine, Baumaschine, LKW oder dergleichen ausgebildet sein. Ferner kann das Transportfahrzeug ein Eisenbahnwagen, ein LKW-Anhänger oder dergleichen sein, sodass sich schließlich die erfindungsgemäße Arretiervorrichtung in einem großen Einsatzspektrum verwendet werden kann.

Eine besonders effizienter Be- und Entladevorgang wird dann erreicht, wenn in einer vorteilhaften Weiterbildung der Erfindung die erfindungsgemäße Arretiervorrichtung in einem Verfahren mit den folgenden Schritten verwendet wird:
a) Befestigung zweier oder mehrerer Trageinheiten auf einem Transportfahrzeug, wobei die Lage der Trageinheiten auf dem Transportfahrzeug mit der Position der mit der Maschine verbundenen Arretieranschläge und/oder den Fahrzeugachsen eines auf dem Transportfahrzeug zu arretierenden Fahrzeugs korrespondiert
b) Adaptierung zumindest eines Befestigungselementes mit der jeweiligen Trageinheit in der Weise, dass in einer ersten Schaustellung des Befestigungselementes zunächst die Arretierelemente die jeweilige Aussparung der Trageinheit durchsetzt und sodann das Befestigungselement in eine weitere Schaltstellung verbracht wird, in der das Befestigungselement fest mit der jeweiligen Trageinheit verbunden ist
c) Demontage der Laufräder des Fahrzeugs von den Fahrzeugachsen und Positionierung der Maschine oder des Fahrzeugs mittels Hebezeug über den Befestigungselementen der Trageinheiten in der Weise, dass beim Absenken der Maschine oder des Fahrzeugs die der Maschine oder den Fahrzeugachsen des Fahrzeugs zugeordneten, Ausnehmungen aufweisenden Arretieranschläge im Bereich der Aufnahmeelemente der Befestigungselemente positioniert sind
d) Absenken der Maschine oder des Fahrzeugs, sodass die Aufnahmeelemente der Befestigungselemente und die jeweiligen Aussparungen der Arretieranschläge einander durchsetzen
e) Verschwenken des Befestigungselementes in eine weitere Schaltstellung in der das Arretierelement versetzt zu der ihm zugeordneten Aussparung der Trageinheit und das Aufnahmeelement versetzt zu der ihm zugeordneten Ausnehmung des Arretieranschlags angeordnet sind.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: ein erfindungsgemäß verriegelter Mähdrescher auf einem Transportfahrzeug
- Figur 2: eine Detailansicht der erfindungsgemäßen Arretiervorrichtung in einer ersten Schaltstellung
- Figur 3: eine Detailansicht der erfindungsgemäßen Arretiervorrichtung in einer zweiten Schaltstellung
- Figur 4: eine Detailansicht der erfindungsgemäßen Arretiervorrichtung in einer dritten Schaltstellung

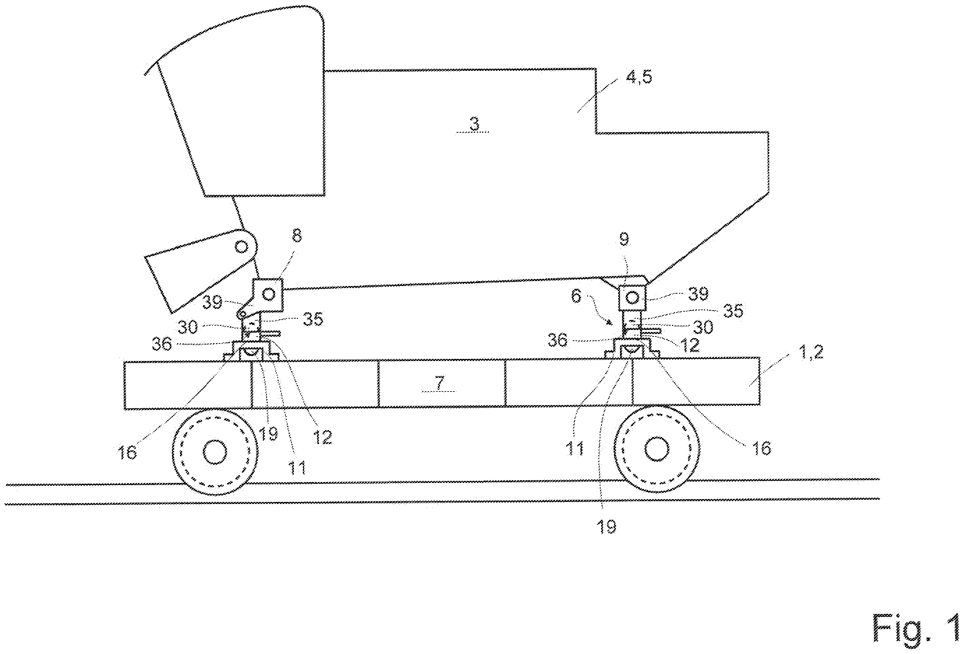

Fig. 1 zeigt ein als Bahnwagon 2 ausgeführtes Transportfahrzeug 1 auf weichem eine Maschine 3, hier ein als Mähdrescher 5 ausgeführtes Fahrzeug 4, mittels der noch näher zu beschreibenden erfindungsgemäßen Arretiervorrichtung 6 auf der Ladefläche 7 des Bahnwagons 2 für den Schienentransport arretiert ist. Es liegt im Rahmen der Erfindung, dass das zu transportierende Fahrzeug 3 auch als beliebige landwirtschaftliche Arbeitsmaschine, wie Feldhäcksler, Traktor, Ladewagen oder als LKW ausgeführt sein kann und das Transportfahrzeug 1 abweichend vom dargestellten Ausführungsbeispiel von einem LKW-Anhänger gebildet wird, Der dargestellte Mähdrescher 5 verfügt über eine Vorderachse 8 sowie eine Hinterachse 9, wobei die nicht abgebildeten Laufräder beider Achsen 8, 9 zunächst demontiert wurden, bevor der Mähdrescher 5 mittels eines ebenfalls nicht dargestellten Hebezeugs in die Arretiervorrichtungen 6 eingesetzt wird. Damit der Mähdrescher 5 standsicher und eine optimale Lastverteilung aufweisend auf der Ladefläche 7 positioniert werden kann, sind jeder Fahrzeugachse 8, 9 in ihren seitlichen Endbereichen jeweils eine der erfindungsgemäßen Arretiervorrichtungen 6 zugeordnet, sodass jede Fahrzeugachse 8,9 zumindest über zwei Arretiervorrichtungen 6 mit der Ladefläche 7 des Transportfahrzeugs 1 verbunden ist. Es liegt im Rahmen der Erfindung, dass jede Fahrzeugachse 8,9 mit einer Vielzahl von Arretiervorrichtungen 6 lagefixiert ist.

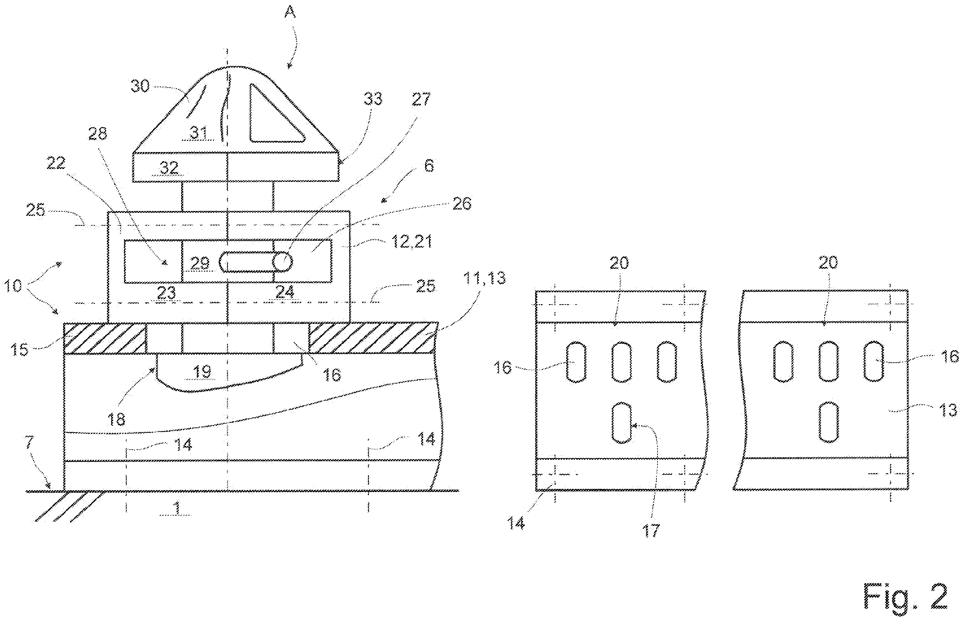

Fig. 2 zeigt nun Bestandteile der erfindungsgemäße Arretiervorrichtung 6 in einer ersten Schaltstellung A im Detail. Dargestellt sind hier die die Fixiervorrichtung 10 bildende Trageinheit 11 und das Befestigungselement 12. Die Trageinheit 11 ist als mehrfach abgewinkelte Traverse 13, vorzugsweise aus Stahl bestehend, ausgebildet, die mittels Schraubverbindungen 14 auf der Ladefläche 7 des Transportfahrzeugs 1 befestigt ist. Es liegt im Rahmen der Erfindung, dass die Traverse 13 zudem unmittelbar auf die Ladefläche 7 des Transportfahrzeugs 1 aufgeschweißt sein kann. In ihrem der Ladefläche 7 abgewandten Bereich ist der Traverse 13 eine ebene Auflagefläche 15 angeformt, die entweder von einer einzigen oder in regelmäßigen oder unregelmäßigen Abständen angeordneten Aussparungen 16 durchsetzt ist. Die Außenkontur 17 der jeweiligen Aussparung 16 korrespondiert mit der Außenkontur 18 der noch näher zu beschreibenden Arretierelemente 19 des Befestigungselementes 12 und ist vorzugsweise langlochförmig ausgebildet (siehe nicht-maßstäbliche rechte Darstellung in Fig.2). Je nachdem, ob die Arretiervorrichtung 6 zur Fixierung von Maschinen 3 mit oder ohne Fahrzeugachsen 8, 9 eingesetzt werden soll, kann sich die Traverse 13 entweder quer über die gesamte Ladefläche 7 des Transportfahrzeugs 1 erstrecken und eine Vielzahl von Aussparungsanordnungen 20 umfassen oder es kommen Traversen 13 kurzer Länge zum Einsatz, die jeweils nur eine einzige Aussparungsanordnung 20 umfasst. Je nach gewählter Ausführung bildet eine Traverse 13 dann eine Vielzahl von Arretiervorrichtungen 6 oder jeweils nur eine einzige Arretiervorrichtung 6 aus.

Erfindungsgemäß steht die Trageinheit 11 mit zumindest einem Befestigungselement 12 in Wirkverbindung, In einer bevorzugten Ausführungsform ist das Befestigungselement 12 als so genannter Twist-Lock 21 ausgeführt. Derartige Befestigungselemente 12 verfügen über ein zweiteiliges Lagergehäuse 22, dessen Lagerhälften 23, 24 über Schraubverbindungen 25 miteinander verbunden sind. Zugleich bildet das Lagergehäuse 22 einen Durchgriff 26 aus, der von einem Stellhebel 27 durchsetzt wird. Der Stellhebel 27 ist im Inneren des Lagergehäuses 22 mit einer in dem Lagergehäuse 22 drehbar gelagerten Arretiereinheit 28 fest verbunden. Die Arretiereinheit 28 umfasst die mit dem Stellhebel 27 verbundene Stellwelle 29 der untenseitig das bereits erwähnte Arretierelement 19 angeformt ist. Das Arretierelement 19 hat in der Regel eine pyramidenstumpfförmige Gestalt, sodass sich eine im Querschnitt rechteckige Außenkontur 18 ergibt. Die rechteckige Außenkontur 18 korrespondiert mit der langlochförmigen Außenkontur 17 der in die Trageinheit 11 eingearbeiteten Aussparungen 16, sodass das Befestigungselement 12 dann in die Trageinheit 11 einsetztbar ist, wenn die Aussparung 16 der Trageinheit 11 und das Arretierelement 19 zueinander fluchtend ausgerichtet sind. Obenseitig ist der Stellwelle 29 schließlich ein Aufnahmeelement 30 angeformt, welches vorzugsweise eine konusförmige Gestalt 31 aufweist, die in einen Sockelbereich 32 mündet der schließlich eine im wesentlichen rechteckige Außenkontur 33 aufweist. In dieser ersten Schaltstellung A hat das Befestigungselement 12 letztlich die Funktion, sich schnell und ohne Hinzunahme von Hilfsmitteln, wie etwa Werkzeugen, in die mit der Ladefläche 7 des Transportfahrzeugs 1 verbundene Trageinheit 11 einsetzen zu lassen.

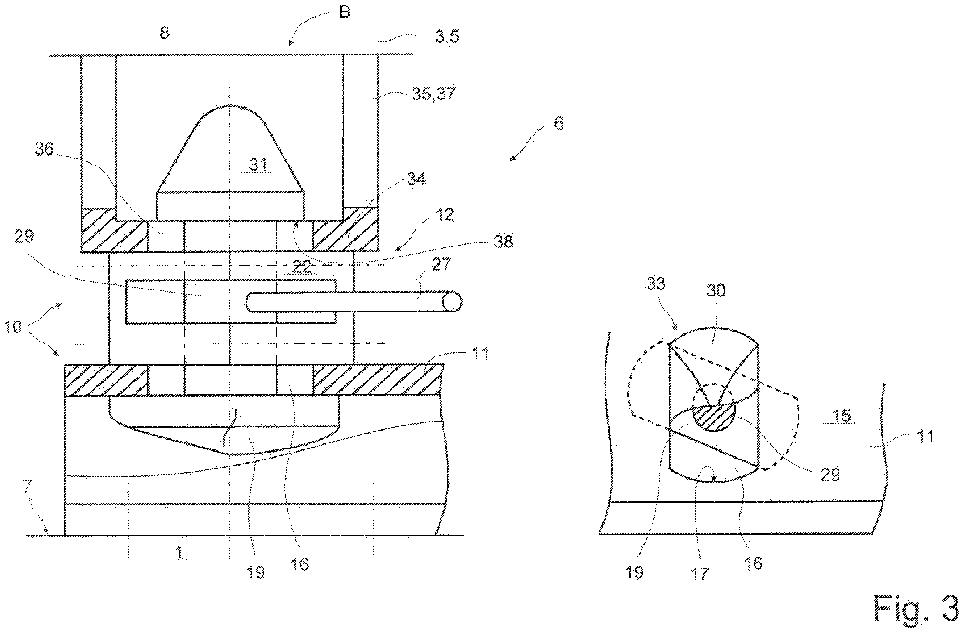

Nachdem das Befestigungselement 12 in die Trageinheit 11 eingesetzt wurde, wird der Stellhebel 27 betätigt und das Befestigungselemente 12 in die in Fig.3 dargestellte Position verschwenkt. Dabei ist die Stellwelle 29 in eine Position gedreht worden, in der das Arretierelement 19 gegen die in die Trageinheit 11 eingelassene Aussparung 16 versetzt angeordnet ist. Die nunmehr zueinander versetzt positionierten Außenkonturen 17, 18 des Arretierelementes 19 und der Aussparung 16 führen dazu, dass das Befestigungselement 12 mit der Trageinheit 11 formschlüssig verriegelt wird. Zugleich bewegt sich das der Stellwelle 29 obenseitig angeformte Aufnahmeelement 30 in eine mit dem oberen Abschluss 34 des Lagergehäuses 22 fluchtende Position. Damit befindet sich die von der Trageinheit 11 und dem Befestigungselement 12 gebildete Fixiervorrichtung 10 in einer Position, in der das Aufnahmeelement 30 erfindungsgemäß mit der in ihrer Position auf einem Transportfahrzeug 1 zu arretierenden Maschine 3 in Wirkverbindung gebracht werden kann. In dem in Fig. 3 dargestellten Ausführungsbeispiel ist schematisch die Vorderachse 8 der als Mähdrescher 5 ausgeführten Maschine 3 abgebildet, der in einem untenseitigen Bereich erfindungsgemäß ein Arretieranschlag 35 angeformt ist. In einer bevorzugten Ausgestaltung ist der Arretieranschlag 35 als ein von einer Ausnehmung 36 wenigstens teilweise durchsetztes Winkelprofil 37 ausgeführt. Die Außenkontur 38 der zumindest einen Ausnehmung 36 des Arretieranschlags 35 ist dabei so beschaffen, dass sie mit der Außenkontur 33 des Aufnahmeelementes 30 des Befestigungselementes 12 in der Weise korrespondiert, dass das Aufnahmeelement 30 die Ausnehmung 36 durchsetzen kann. Indem nun die im beschriebenen Ausführungsbeispiel als Mähdrescher 5 ausgeführte Maschine 3 mittels nicht näher dargestellter Hebezeuge in eine Position gebrachte wird, in der die Ausnehmung 36 des Arretieranschlags 35 im Bereich des dem Befestigungselement 12 zugeordneten Aufnahmeelementes 30 freibeweglich positioniert wird, kann durch Absenken des Mähdreschers 5 die Ausnehmung 36 des Arretieranschlags 35 mit dem Aufnahmeelement 30 in Wirkverbindung gebracht werden. Die konusförmige Gestalt 31 des Aufnahmeelementes 30 unterstützt dabei das Einfädeln des gestellfesten Aufnahmeelementes 30 in die freibewegliche Ausnehmung 36 des Arretieranschlags 35. Damit befindet sich die erfindungsgemäße Arretiervorrichtung 6 schließlich in einer Schaltstellung B in der das Arretierelement 19 des Befestigungselementes 12 mit der an der Ladefläche 7 des Transportfahrzeugs 1 angeordneten Trageinheit 11 fest verbunden ist und der der Maschine 3 zugeordnete Arretieranschlag 35 und damit die Maschine 3 selbst auf dem jeweiligen Befestigungselement 12 aufsitzt.

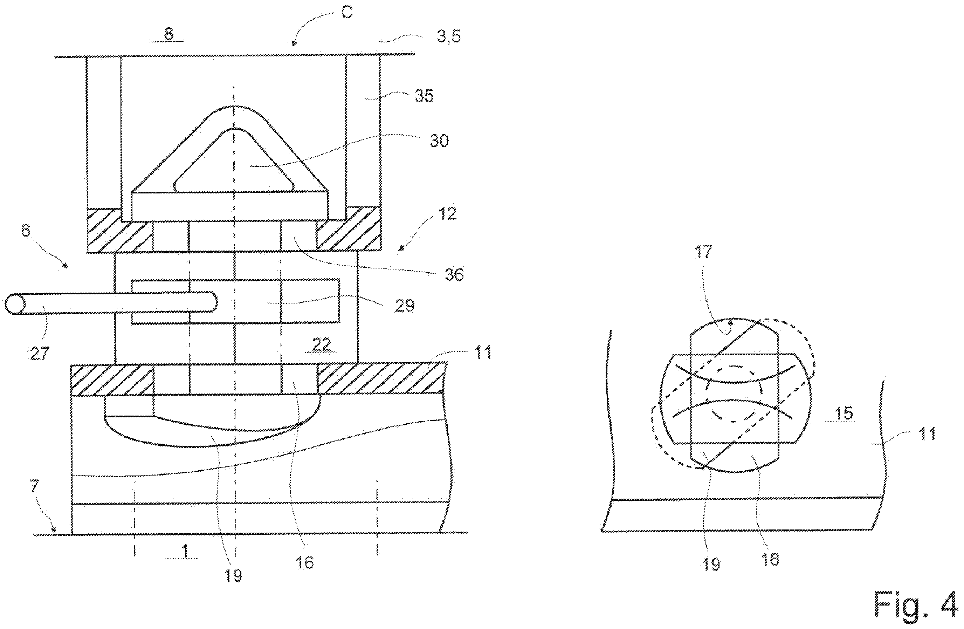

Indem nun der Stellhebel 27 des Befestigungselementes 12 in die in Fig. 4 dargestellte Position verschwenkt wird die Stellwelle 29 so gedreht, dass das Arretierelemente 19 in eine zu der in die Trageinheit 11 eingearbeiteten Aussparung 16 versetzten Position gelangt. Zugleich wird auch das der Stellwelle 29 obenseitig angeformte Aufnahmeelement 30 in eine zu der in den Arretieranschlag 35 eingelassenen Ausnehmung 36 versetzte Position bewegt, im dargestellten Ausführungsbeispiel steht das Aufnahmeelement 30 nahezu senkrecht zu der der Trageinheit 11 zugeordneten Aussparung 16.

Damit befindet sich die erfindungsgemäße Arretiervorrichtung 6 schließlich in einer Schaltstellung C in der das Arretierelement 19 des Befestigungselementes 12 mit der an der Ladefläche 7 des Transportfahrzeugs 1 angeordneten Trageinheit 11 fest verbunden ist und zugleich auch der an der Maschine 3 angeordnete Arretieranschlag 35 und damit die Maschine 3 selbst mit dem Befestigungselement 12 fest verbunden ist.

Indem nun die Maschine 3 als Fahrzeug 4, vorzugsweise als Mähdrescher 5, ausgeführt ist und gemäß Fig. 1 zumindest eine Vorderachse 8 und wenigstens eine Hinterachse 9 umfassend ausgebildet ist und der Vorderachse 8 und/oder der Hinterachse 9 im Bereich der jeweiligen Laufräder jeweils zumindest ein Arretieranschlag 35 zugeordnet ist und der jeweilige Arretieranschlag 35 mit der Rahmenstruktur 39 der jeweiligen Fahrzeugachse 8, 9 in der Weise verschweißt ist, dass die den jeweiligen Arretieranschlag 35 zumindest teilweise durchsetzende Ausnehmung 36 in einem untenseitigen Bereich frei zugänglich ist, können Fahrzeuge 4 sehr effizient auf Transportfahrzeuge 1 verladen und auf diesen arretiert werden.

Eine besonders effiziente Verwendung der erfindungsgemäßen Arretiervorrichtung 6 ergibt sich dann, wenn sie in dem nachfolgend an Hand der Figur 1 beschriebenen Verfahren eingesetzt wird. Zunächst werden ein oder mehrere Trageinheiten 11 auf einem Transportfahrzeug 1 lösbar oder unlösbar befestigt, wobei die Lage der Trageinheiten 11 auf dem Transportfahrzeug 1 mit der Position des einen oder der mehreren mit der Maschine 3 verbundenen Arretieranschläge 35 und/der den Fahrzeugachsen 8, 9 eines auf dem Transportfahrzeug 1 zu arretierenden Fahrzeugs 4, hier ein Mähdrescher 5, korrespondiert. In einem nächsten Verfahrensschritt wird jeweils eines der zuvor beschriebenen Befestigungselemente 12 mit der jeweiligen Trageinheit 11 in der Weise verbunden, dass in einer ersten Schaltstellung A (Fig. 2) des Befestigungselementes 12 zunächst die dem jeweiligen Befestigungselement 12 zugeordneten Arretierelemente 19 die korrespondierente Aussparung 16 der jeweiligen Trageinheit 11 durchsetzen. Im folgenden Verfahrensschritt wird schließlich das Befestigungselement 12 in eine weitere Schaltstellung B (Fig. 3) verbracht, in der das Befestigungselement 12 fest mit der jeweiligen Trageinheit 11 verbunden ist. Damit ist das Transportfahrzeug 1 für die Aufnahme eines auf ihm zu arretierenden Fahrzeugs 4 oder einer Maschine 3 vorbereitet.

Sofern die zu arretierende Maschine 3 ein Laufräder aufweisendes Fahrzeug 4 ist, werden in einem weiteren Verfahrensschritt die Laufräder des Fahrzeugs 4 von den Fahrzeugachsen 8, 9 demontiert. Sofern die zu arretierende Maschine 3 über keine Laufräder verfügt, entfällt dieser Verfahrensschritt. Es folgt schließlich die Positionierung der Maschine 3 oder des Fahrzeugs 4 mittels eines nicht dargestellten Hebezeugs über den Befestigungselementen 12 der jeweiligen Trageinheiten 11 in der Weise, dass beim Absenken der Maschine 3 oder des Fahrzeugs 4 die der Maschine 3 oder den Fahrzeugachsen 8, 9 des Fahrzeugs 4 zugeordneten, Ausnehmungen 36 aufweisenden Arretieranschläge 35 im Bereich der Aufnahmeelemente 30 der Befestigungselemente 12 positioniert sind. Sodann wird die Maschine 3 oder des Fahrzeugs 4 mittels des Hebezeugs so abgesenkt, dass die Aufnahmeelemente 30 der Befestigungselemente 12 und die jeweiligen Ausnehmungen 36 der Arretieranschläge 35 einander durchsetzen.

Im nächsten Verfahrensschritt wird das jeweilige Befestigungselemente 12 in eine weitere Schaltstellung C (Fig. 4) bewegt, in der das Arretierelement 19 versetzt zu der ihm zugeordneten Aussparung 16 der Trageinheit 11 und das Aufnahmeelement 30 versetzt zu der ihm zugeordneten Ausnehmung 36 des Arretieranschlags 35 angeordnet sind, sodass schließlich die Maschine 3 oder das Fahrzeug 4 mittels einer oder mehrerer der erfindungsgemäßen Arretiervorrichtungen 6 auf der Ladefläche 7 eines Transportfahrzeugs 1 arretiert ist.

**Bezugszeichenliste:**

| | | | |
|---|---|---|---|
| 1 | Transportfahrzeug | 31 | konusförmige Gestalt |
| 2 | Bahnwagon | 32 | Sockelbereich |
| 3 | Maschine | 33 | Außenkontur |
| 4 | Fahrzeug | 34 | Abschluss |
| 5 | Mähdrescher | 35 | Arretieranschlag |
| 6 | Arretiervorrichtung | 36 | Ausnehmung |
| 7 | Ladefläche | 37 | Winkelprofil |
| 8 | Vorderachse | 38 | Außenkontur |
| 9 | Hinterachse | 39 | Rahmenstruktur |
| 10 | Fixiervorrichtung | | |
| 11 | Trageinheit | | |
| 12 | Befestigungselement | | |
| 13 | Traverse | | |
| 14 | Schraubverbindung | | |
| 15 | Auflagefläche | | |
| 16 | Aussparung | | |
| 17 | Außenkontur | | |
| 18 | Außenkontur | | |
| 19 | Arretierelement | | |
| 20 | Aussparungsanordnung | | |
| 21 | Twist-Lock | | |
| 22 | Lagergehäuse | | |
| 23 | Lagerhälfte | | |
| 24 | Lagerhälfte | | |
| 25 | Schraubverbindung | | |
| 26 | Durchgriff | | |
| 27 | Stellhebel | | |
| 28 | Arretiereinheit | | |
| 29 | Stellwelle | | |
| 30 | Aufnehmeelement | | |

## Patentansprüche

1. Arretiervorrichtung zur Arretierung wenigstens einer Maschine auf einem Transportfahrzeug, wobei die Maschine zumindest einen Arretieranschlag umfasst und wobei die zu arretierende Maschine (3) als Fahrzeug (4), zumindest eine Vorderachse (8) und eine Hinterachse (9) umfassend ausgebildet ist, **dadurch gekennzeichnet,**
**dass** die Arretiervorrichtung (6) zumindest eine mit dem Transportfahrzeug (1) verbundene Trageinheit (11), ein mit der Trageinheit (11) verbindbares Befestigungselement (12) und den zumindest einen mit der Maschine (3-5) verbundenen Arretieranschlag (35) umfasst und wobei der zumindest eine Arretieranschlag (35) formschlüssig mit dem Befestigungselement (12) koppelbar ist, wobei für jede Fahrzeugachse (8, 9) des zu arretierenden Fahrzeugs (4) jeweils eine Trageinheit (11) auf dem Transportfahrzeug (4) positioniert ist und jede Trageinheit (11) jeweils in ihren außenseitigen Bereichen eine oder mehrere Aussparungen (16, 20) aufweist.

2. Arretiervorrichtung zur Arretierung wenigstens einer Maschine auf einem Transportfahrzeug nach Anspruch 1,
**dadurch gekennzeichnet,**
**dass** die mit dem Transportfahrzeug (1) verbundene Trageinheit (11) als Traverse (13) ausgebildet ist, die in ihrem tarnsportfahrzeugseitigen Bereich mit dem Transportfahrzeug (1) lösbar verbunden ist und die in ihrem fahrzeugseitigen Bereich eine von einer oder mehreren Aussparungen (16) durchsetzte Auflagefläche (15) umfasst.

3. Arretiervorrichtung zur Arretierung wenigstens einer Maschine auf einem Transportfahrzeug nach Anspruch 2,
**dadurch gekennzeichnet,**
**dass** die eine oder mehreren Aussparungen (16) als Langlöcher ausgebildet sind und die Vielzahl von Langlöchern in regelmäßigen oder unregelmäßigen Abständen die Auflagefläche (15) durchsetzen.

4. Arretiervorrichtung zur Arretierung wenigstens einer Maschine auf einem Transportfahrzeug nach einem der vorhergehenden Ansprüche,
**dadurch gekennzeichnet,**
**dass** dem Transportfahrzeug (1) eine Vielzahl von Trageinheiten (11) zugeordnet sind und jede der Trageinheiten (11) lösbar mit dem Transportfahrzeug (1) verbunden ist.

5. Arretiervorrichtung zur Arretierung wenigstens einer Maschine auf einem Transportfahrzeug nach Anspruch 1,
**dadurch gekennzeichnet,**
**dass** das mit der Trageinheit (11) verbindbare Befestigungselement (12) eine um eine vertikale Achse verdrehbare Arretiereinheit (27-29) umfasst, die in ihrem untenseitigen Bereich zumindest ein Arretierelement (19) und in ihrem obenseitigen Bereich zumindest ein Aufnahmeelement (30) umfasst.

6. Arretiervorrichtung zur Arretierung wenigstens einer Maschine auf einem Transportfahrzeug nach Anspruch 5,
**dadurch gekennzeichnet,**
**dass** das zumindest eine Arretierelement (19) im Querschnitt mit der Gestalt der Aussparungen (16) der Trageinheit (11) in der Weise korrespondiert, dass das Arretierelement (19) die Aussparung (16) durchsetzen kann und durch Verdrehen de Arretiereinheit (27-29) des Befestigungselementes (12) in seiner Ausrichtung zur Aussparung (16) versetzbar ist, wobei die Änderung der Ausrichtung zugleich eine Lagefixierung des Befestigungselementes (12) an der Trageinheit (11) bewirkt.

7. Arretiervorrichtung zur Arretierung wenigstens einer Maschine auf einem Transportfahrzeug nach einem der Ansprüche 5 - 6,
**dadurch gekennzeichnet,**
**dass** das Aufnahmeelement (19) eine konische Gestalt aufweist.

8. Arretiervorrichtung zur Arretierung wenigstens einer Maschine auf einem Transportfahrzeug nach einem der Ansprüche 5- 7,
**dadurch gekennzeichnet,**
**dass** das Befestigungselement (12) als so genannter Twist-Lock (21) ausgeführt ist.

9. Arretiervorrichtung zur Arretierung wenigstens einer Maschine auf einem Transportfahrzeug nach Anspruch 1,
**dadurch gekennzeichnet,**
**dass** der zumindest eine mit der Maschine (3) verbundene Arretieranschlag (35) als von einer Ausnehmung (36) durchsetztes Winkelprofil (37) ausgebildet ist.

10. Arretiervorrichtung zur Arretierung wenigstens einer Maschine auf einem Transportfahrzeug nach Anspruch 9,
**dadurch gekennzeichnet,**
**dass** die Ausnehmung (36) den Arretieranschlag (35) wenigstens teilweise durchsetzt.

11. Arretiervorrichtung zur Arretierung wenigstens einer Maschine auf einem Transportfahrzeug nach einem der Ansprüche 9 -10,
**dadurch gekennzeichnet,**
**dass** die Außenkontur (38) der zumindest einen Ausnehmung (36) des Arretieranschlags (35) mit der Außenkontur (33) des Aufnahmeelementes (30) des Befestigungselementes (12) in der Weise korrespondiert, dass das Aufnahmeelement (30) die Ausnehmung (36) durchsetzen kann und durch Verdrehen der Arretiereinheit (27-29) des Befestigungselementes (12) in seiner Ausrichtung zur Ausnehmung (36) versetzbar ist, wobei die Änderung der Ausrichtung zugleich eine Lagefixierung des Arretieranschlags (35) an dem Befestigungselement (12) bewirkt.

12. Arretiervorrichtung zur Arretierung wenigstens einer Maschine auf einem Transportfahrzeug nach einem der Ansprüche 9 - 11,
**dadurch gekennzeichnet,**
**dass** Vorderachse (8) und der Hinterachse (9) des Fahrzeugs (4) im Bereich der jeweiligen Laufräder jeweils zumindest ein Arretieranschlag (35) zugeordnet ist und der jeweilige Arretieranschlag (35) mit der Rahmenstruktur (39) der jeweiligen Fahrzeugachse (8, 9) in der Weise verschweißt ist, dass die den jeweiligen Arretieranschlag (35) zumindest teilweise durchsetzende Ausnehmung (36) in einem untenseitigen Bereich frei zugänglich ist.

13. Arretiervorrichtung zur Arretierung wenigstens einer Maschine auf einem Transportfahrzeug nach Anspruch 8,
**dadurch gekennzeichnet,**
**dass** die Arretiereinheit (27-29) des Befestigungselements (12) drei Schaltstellungen (A, B, C) umfasst und wobei in einer ersten Schaltstellung (A) das Arretierelement (19) fluchtend zur Lage der Aussparung (16) der Trageinheit (11) ausgerichtet ist, in einer zweiten Schaltstellung (B) das Aufnahmeelement (30) fluchtend zur Lage der Ausnehmung (36) des Arretieranschlags (35) ausgerichtet ist und in einer dritten Schaltstellung (C) das Arretierelement (19) und das Aufnahmeelement (30) jeweils versetzt zur jeweils korrespondierenden Ausnehmung (36) oder Aussparung (16) angeordnet sind.

14. Arretiervorrichtung zur Arretierung wenigstens einer Maschine auf einem Transportfahrzeug nach einem der vorhergehenden Ansprüche,
**dadurch gekennzeichnet,**
**dass** das Fahrzeug eine landwirtschaftliche Arbeitsmaschine (5), eine Baumaschine, ein LKW oder dergleichen ist.

15. Arretiervorrichtung zur Arretierung wenigstens einer Maschine auf einem Transportfahrzeug nach einem der vorhergehenden Ansprüche,
**dadurch gekennzeichnet,**
**dass** das Transportfahrzeug (1) ein Bahnwagon (2), ein LKW-Anhänger oder dergleichen ist.

16. Verwendung der Arretiervorrichtung nach einem oder mehreren der vorhergehenden Ansprüche in einem Verfahren die folgende Schritte umfassend:
a) Befestigung zweier oder mehrerer Trageinheiten (11) auf einem Transportfahrzeug (1), wobei die Lage der Trageinheiten (11) auf dem Transportfahrzeug (1) mit der Position der mit der Maschine (3) verbundenen Arretieranschläge (35) und/oder den Fahrzeugachsen (8, 9) eines auf dem Transportfahrzeug (1) zu arretierenden Fahrzeugs (4, 5) korrespondiert
b) Adaptierung zumindest eines Befestigungselementes (12) mit der jeweiligen Trageinheit (11) in der Weise, dass in einer ersten Schaltstellung (A) der Arretiereinheit (27-29) des Befestigungselementes (12) zunächst die Arretierelemente (19) die jeweilige Aussparung (16) der Trageinheit (11) durchsetzt und sodann die Arretiereinheit (27-29) des Befestigungselements (12) in eine weitere Schaltstellung (B) verbracht wird, in der das Befestigungselement (12) fest mit der jeweiligen Trageinheit (11) verbunden ist
c) Demontage der Laufräder des Fahrzeugs (4, 5) von den Fahrzeugachsen (8, 9) und Positionierung der Maschine (3) oder des Fahrzeugs (4, 5) mittels Hebezeug über den Befestigungselementen (12) der Trageinheiten (11) in der Weise, dass beim Absenken der Maschine (3) oder des Fahrzeugs (4, 5) die der Maschine (3) oder den Fahrzeugachsen (8, 9) des Fahrzeugs (4, 5) zugeordneten, Ausnehmungen (36) aufweisenden Arretieranschläge (35) im Bereich der Aufnahmeelemente (30) der Befestigungselemente (12) positioniert sind
d) Absenken der Maschine (3) oder des Fahrzeugs (4, 5), sodass die Aufnahmeelemente (30) der Befestigungselemente (12) und die jeweiligen Ausnehmungen (36) der Arretieranschläge (35) einander durchsetzen
e) Verschwenken der Arretiereinheit (27-29) des Befestigungselementes (12) in eine weitere Schaltstellung (C) in der das Arretierelement (19) versetzt zu der ihm zugeordneten Aussparung (16) der Trageinheit (11) und das Aufnahmeelement (30) versetzt zu der ihm zugeordneten Ausnehmung (36) des Arretieranschlags (35) angeordnet sind.

## Claims

1. Locking device for locking at least one machine on a transport vehicle,
wherein the machine comprises at least one locking stop and wherein the machine (3) to be locked is designed as a vehicle (4) comprising at least one front axle (8) and one rear axle (9),
**characterized in that**
the locking device (6) comprises at least one carrier unit (11) connected to the transport vehicle (1), a securing element (12) which can be connected to the carrier unit (11), and the at least one locking stop (35) connected to the machine (3-5), and wherein the at least one locking stop (35) can be coupled in form-locking manner with the securing element (12), wherein, for each vehicle axle (8, 9) of the vehicle (4) to be locked, a carrier unit (11) is positioned in each case on the transport vehicle (4), and each carrier unit (11) has in each case in its external areas one or more recesses (16, 20).

2. Locking device for locking at least one machine on a transport vehicle according to claim 1,
**characterized in that**
the carrier unit (11) connected to the transport vehicle (1) is formed as a cross arm (13) which is detachably connected to the transport vehicle (1) in its transport vehicle-side area, and which comprises in its vehicle-side area a support surface (15) through which one or more recesses (16) pass.

3. Locking device for locking at least one machine on a transport vehicle according to claim 2,
**characterized in that**
the one or more recesses (16) are formed as oblong holes and the plurality of oblong holes pass through the support surface (15) at regular or irregular intervals.

4. Locking device for locking at least one machine on a transport vehicle according to one of the preceding claims,
**characterized in that**
a plurality of carrier units (11) is allocated to the transport vehicle (1), and each of the carrier units (11) is detachably connected to the transport vehicle (1).

5. Locking device for locking at least one machine on a transport vehicle according to claim 1,
**characterized in that**
the securing element (12) which can be connected to the carrier unit (11) comprises a locking unit (27-29), rotatable about a vertical axis, which comprises in the area of its underside at least one locking element (19) and in the area of its upper side at least one mounting element (30).

6. Locking device for locking at least one machine on a transport vehicle according to claim 5,
**characterized in that**
the at least one locking element (19) corresponds in cross-section with the shape of the recesses (16) of the carrier unit (11) such that the locking element (19) can pass through the recess (16) and, by twisting the locking unit (27-29) of the securing element (12), can be displaced in its alignment relative to the recess (16), wherein the change in alignment simultaneously fixes the securing element (12) in position on the carrier unit (11).

7. Locking device for locking at least one machine on a transport vehicle according to one of claims 5 - 6,
**characterized in that**
the mounting element (19) has a conical shape.

8. Locking device for locking at least one machine on a transport vehicle according to one of claims 5 - 7,
**characterized in that**
the securing element (12) is designed as a so-called twistlock (21).

9. Locking device for locking at least one machine on a transport vehicle according to claim 1,
**characterized in that**
the at least one locking stop (35) connected to the machine (3) is formed as an angle profile (37) through which an opening (36) passes.

10. Locking device for locking at least one machine on a transport vehicle according to claim 9,
**characterized in that**
the opening (36) at least partly passes through the locking stop (35).

11. Locking device for locking at least one machine on a transport vehicle according to one of claims 9 - 10,
**characterized in that**
the outer contour (38) of the at least one opening (36) of the locking stop (35) corresponds to the outer contour (33) of the mounting element (30) of the securing element (12) such that the mounting element (30) can pass through the opening (36) and, by twisting the locking unit (27-29) of the securing element (12), can be displaced in its alignment relative to the opening (36), wherein the change in alignment simultaneously fixes the locking stop (35) in position on the securing element (12).

12. Locking device for locking at least one machine on a transport vehicle according to one of claims 9 - 11,
**characterized in that**
the front axle (8) and the rear axle (9) of the vehicle (4) are each allocated at least one locking stop (35) in the area of the respective wheels, and the respective locking stop (35) is welded to the framework (39) of the respective vehicle axle (8, 9) such that the opening (36) at least partly passing through the respective locking stop (35) is freely accessible in an area of its underside.

13. Locking device for locking at least one machine on a transport vehicle according to claim 8,
**characterized in that**
the locking unit (27-29) of the securing element (12) comprises three switch positions (A, B, C) and wherein in a first switch position (A) the locking element (19) is aligned flush with the position of the recess (16) of the carrier unit (11), in a second switch position (B) the mounting element (30) is aligned flush with the position of the opening (36) of the locking stop (35), and in a third switch position (C) the locking element (19) and the mounting element (30) are arranged displaced in each case relative to the respectively corresponding opening (36) or recess (16).

14. Locking device for locking at least one machine on a transport vehicle according to one of the preceding claims,
**characterized in that**
the vehicle is an agricultural machine (5), a construction machine, an HGV or similar.

15. Locking device for locking at least one machine on a transport vehicle according to one of the preceding claims,
**characterized in that**
the transport vehicle (1) is a railway wagon (2), an HGV trailer or similar.

16. Use of the locking device according to one or more of the preceding claims in a method comprising the following steps:
a) securing two or more carrier units (11) on a transport vehicle (1), wherein the position of the carrier units (11) on the transport vehicle (1) corresponds to the position of the locking stops (35) connected to the machine (3) and/or the vehicle axles (8, 9) of a vehicle (4, 5) to be locked on the transport vehicle (1)
b) adapting at least one securing element (12) to the respective carrier unit (11) such that, in a first switch position (A) of the locking unit (27-29) of the securing element (12), first the locking element (19) passes through the respective recess (16) of the carrier unit (11), and then the locking unit (27-29) of the securing element (12) is brought into a further switch position (B) in which the securing element (12) is connected securely to the respective carrier unit (11)
c) removing the wheels of the vehicle (4, 5) from the vehicle axles (8, 9) and positioning the machine (3) or the vehicle (4, 5) by means of lifting equipment over the securing elements (12) of the carrier units (11) such that, when the machine (3) or the vehicle (4, 5) is lowered, the locking stops (35) allocated to the machine (3) or the vehicle axles (8, 9) of the vehicle (4, 5) and having openings (36) are positioned in the area of the mounting elements (30) of the securing elements (12)
d) lowering the machine (3) or the vehicle (4, 5) with the result that the mounting elements (30) of the securing elements (12) and the respective openings (36) of the locking stops (35) pass through one another
e) swivelling the locking unit (27-29) of the securing element (12) into a further switch position (C) in which the locking element (19) is arranged displaced relative to the recess (16) of the carrier unit (11) allocated to it, and the mounting element (30) is arranged displaced relative to the opening (36) of the locking stop (35) allocated to it.

## Revendications

1. Dispositif de blocage pour le blocage d'au moins une machine sur un véhicule de transport, la machine comportant au moins une butée de blocage, et la machine (3) à bloquer étant conformée en véhicule (4) comprenant au moins un essieu avant (8) et un essieu arrière (9), **caractérisé en ce que** le dispositif de blocage (6) comprend au moins une unité porteuse (11) reliée au véhicule de transport (1), un élément de fixation (12) pouvant être relié à l'unité porteuse (11) et la au moins une butée de blocage (35) reliée à la machine (3-5), et la au moins une butée de blocage (35) étant couplable par complémentarité de formes avec l'élément de fixation (12), une unité porteuse (11) étant positionnée sur le véhicule de transport (4) pour chaque essieu de véhicule (8, 9) du véhicule (4) à bloquer et chaque unité porteuse (11) comportant dans ses zones extérieures un ou plusieurs évidements (16, 20).

2. Dispositif de blocage pour le blocage d'au moins une machine sur un véhicule de transport selon la revendication 1, **caractérisé en ce que** l'unité porteuse (11) reliée au véhicule de transport (1) est conformée en traverse (13) qui est reliée de façon amovible au véhicule de transport (1) et qui, dans sa zone côté véhicule, comprend une surface d'appui (15) traversée par un ou plusieurs évidements (16).

3. Dispositif de blocage pour le blocage d'au moins une machine sur un véhicule de transport selon la revendication 2, **caractérisé en ce que** le ou les un ou plusieurs évidements (16) sont conformés en trous oblongs et la pluralité de trous oblongs traverse la surface d'appui (15) à intervalles réguliers ou irréguliers.

4. Dispositif de blocage pour le blocage au moins d'une machine sur un véhicule de transport selon une des revendications précédentes, **caractérisé en ce qu'**au véhicule de transport (1) est associée une pluralité d'unités porteuses (11) et chacune des unités porteuses (11) est reliée au véhicule de transport (1) de façon amovible.

5. Dispositif de blocage pour le blocage d'au moins une machine sur un véhicule de transport selon la revendication 1, **caractérisé en ce que** l'élément de fixation (12) pouvant être relié à l'unité porteuse (11) comprend une unité de blocage (27-29) qui peut tourner autour d'un axe vertical et qui comprend, dans sa zone inférieure, au moins un élément de blocage (19) et, dans sa zone supérieure, au moins un élément récepteur (30).

6. Dispositif de blocage pour le blocage d'au moins une machine sur un véhicule de transport selon la revendication 5, **caractérisé en ce qu'**en coupe transversale le au moins un élément de blocage (19) correspond à la forme des évidements (16) de l'unité porteuse (11), de façon que l'élément de blocage (19) puisse traverser l'évidement (16) et puisse être déplacé, sur le plan de son orientation par rapport à l'évidement (16), par rotation de l'unité de blocage (27-29) de l'élément de fixation (12), la modification de l'orientation provoquant simultanément une immobilisation de l'élément de fixation (12) sur l'unité porteuse (11) .

7. Dispositif de blocage pour le blocage d'au moins une machine sur un véhicule de transport selon une des revendications 5-6, **caractérisé en ce que** l'élément récepteur (19) présente une forme conique.

8. Dispositif de blocage pour le blocage d'au moins une machine sur un véhicule de transport selon une des revendications 5-7, **caractérisé en ce que** l'élément de fixation (12) est conformé en « twist lock » (21).

9. Dispositif de blocage pour le blocage au moins d'une machine sur un véhicule de transport selon la revendication 1, **caractérisé en ce que** la au moins une butée de blocage (35) reliée à la machine (3) est conformée en profilé angulaire (37) traversé par une échancrure (36).

10. Dispositif de blocage pour le blocage d'au moins une machine sur un véhicule de transport selon la revendication 9, **caractérisé en ce que** l'échancrure (36) traverse la butée de blocage (35) au moins en partie.

11. Dispositif de blocage pour le blocage d'au moins une machine sur un véhicule de transport selon une des revendications 9-10, **caractérisé en ce que** le contour extérieur (38) de la au moins une échancrure (36) de la butée de blocage (35) correspond au contour extérieur (33) de l'élément récepteur (30) de l'élément de fixation (12), de façon que l'élément récepteur (30) puisse traverser l'échancrure (36) et puisse être déplacé, sur le plan de son orientation par rapport à l'échancrure (36), par rotation de l'unité de blocage (27-29) de l'élément de fixation (12), la modification de l'orientation provoquant simultanément une immobilisation de la butée de blocage (35) sur l'élément de fixation (12).

12. Dispositif de blocage pour le blocage d'au moins une machine sur un véhicule de transport selon une des revendications 9-11, **caractérisé en ce qu'**au moins une butée de blocage (35) est associée à l'essieu avant (8) et à l'essieu arrière (9) du véhicule (4) dans la zone de chacune des roues porteuses et chaque butée de blocage (35) est soudée à la structure de bâti (39) de chaque essieu de véhicule (8, 9), de façon que l'échancrure (36) traversant au moins en partie chaque butée de blocage (35) soit librement accessible dans sa zone inférieure.

13. Dispositif de blocage pour le blocage d'au moins une machine sur un véhicule de transport selon la revendication 8, **caractérisé en ce que** l'unité de blocage (27-29) de l'élément de fixation (12) comporte trois positions (A, B, C) et, dans une première position (A), l'élément de blocage (19) est orienté en alignement avec la position de l'évidement (16) de l'unité porteuse (11), dans une deuxième position (B), l'élément récepteur (30) est orienté en alignement avec la position de l'échancrure (36) de la butée de blocage (35) et, dans une troisième position (C), l'élément de blocage (19) et l'élément récepteur (30) sont chacun disposés de manière désaxée par rapport à l'échancrure (36) ou l'évidement (16) correspondants.

14. Dispositif de blocage pour le blocage d'au moins une machine sur un véhicule de transport selon une des revendications précédentes, **caractérisé en ce que** le véhicule est une machine de travail agricole (5), une machine de chantier, un camion ou analogue.

15. Dispositif de blocage pour le blocage d'au moins une machine sur un véhicule de transport selon une des revendications précédentes, **caractérisé en ce que** le véhicule de transport (1) est un wagon de chemin de fer (2), une remorque de camion ou analogue.

16. Utilisation du dispositif de blocage selon une ou plusieurs des revendications précédentes dans un procédé comprenant les étapes suivantes :
a) fixation de deux ou plusieurs unités porteuses (11) sur un véhicule de transport (1), la position des unités porteuses (11) sur le véhicule de transport (1) correspondant à la position des butées de blocage (35) reliées à la machine (3) et/ou aux essieux de véhicule (8, 9) d'un véhicule (4, 5) à bloquer sur le véhicule de transport (1)
b) adaptation d'au moins un élément de fixation (12) avec l'unité porteuse correspondante (11), de façon que, dans une première position (A) de l'unité de blocage (27-29) de l'élément de fixation (12), les éléments de blocage (19) traversent d'abord l'évidement correspondant (16) de l'unité porteuse (11) et que l'unité de blocage (27-29) de l'élément de fixation (12) soit ensuite amenée dans une autre position (B) où l'élément de fixation (12) est solidarisé à l'unité porteuse correspondante (11)
c) dépose des roues porteuses du véhicule (4, 5) hors des essieux de véhicule (8, 9) et positionnement de la machine (3) ou du véhicule (4, 5) au moyen d'un engin de levage au-dessus des éléments de fixation (12) des unités porteuses (11), de façon que, lors de la descente de la machine (3) ou du véhicule (4, 5), les butées de blocage (35) associées à la machine (3) ou aux essieux de véhicule (8, 9) du véhicule (4, 5) et comportant des évidements (36) soient positionnées dans la zone des éléments récepteurs (30) de l'élément de fixation (12)
d) descente de la machine (3) ou du véhicule (4, 5), de façon que les éléments récepteurs (30) des éléments de fixation (12) et les évidements (36) des butées de blocage (35) s'interpénètrent
e) pivotement de l'unité de blocage (27-29) de l'élément de fixation (12) dans une autre position (C) où l'élément de blocage (19) est désaxé par rapport à l'évidement (16) de l'unité porteuse (11) qui lui est associé et où l'élément récepteur (30) est disposé de manière désaxée par rapport à l'échancrure (36) de la butée de blocage (35) qui lui est associée.
